(19) Europäisches Patentamt / European Patent Office / Office européen des brevets

(11) **EP 3 083 703 B1**

(12) **EUROPEAN PATENT SPECIFICATION**

(45) Date of publication and mention of the grant of the patent:
**10.08.2022 Bulletin 2022/32**

(21) Application number: **14812744.2**

(22) Date of filing: **17.12.2014**

(51) International Patent Classification (IPC):
**C08B 37/00** (2006.01)

(52) Cooperative Patent Classification (CPC):
**C08B 37/0045**

(86) International application number:
**PCT/EP2014/078194**

(87) International publication number:
**WO 2015/091629 (25.06.2015 Gazette 2015/25)**

(54) **PROCESS FOR EXTRACTION OF CALCIUM SENSITIVE PECTIN**

VERFAHREN ZUR EXTRAKTION VON CALCIUMEMPFINDLICHEM PEKTIN

PROCÉDÉ POUR L'EXTRACTION DE PECTINE SENSIBLE AU CALCIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2013 GB 201322454**

(43) Date of publication of application:
**26.10.2016 Bulletin 2016/43**

(73) Proprietor: **DuPont Nutrition Biosciences ApS 1411 Copenhagen K (DK)**

(72) Inventor: **BUCHHOLT, Hans Christian 8220 Brabrand (DK)**

(74) Representative: **DuPont EMEA Langebrogade 1 1411 Copenhagen K (DK)**

(56) References cited:
**WO-A1-00/39168        CN-A- 103 130 913**
**CZ-A3- 20 003 129      US-A- 4 016 351**

- **RAM SANATI FARAVASH ET AL: "The effect of pH, ethanol volume and acid washing time on the yield of pectin extraction from peach pomace", INTERNATIONAL JOURNAL OF FOOD SCIENCE AND TECHNOLOGY, vol. 42, no. 10, 1 October 2007 (2007-10-01), pages 1177-1187, XP55115337, ISSN: 0950-5423, DOI: 10.1111/j.1365-2621.2006.01324.x**

**Description**

**FIELD OF THE INVENTION**

This invention relates to a process for extraction of calcium sensitive pectin from pectin containing starting material. The invention further relates to the use of the pectin obtained in this process.

**BACKGROUND OF THE INVENTION**

Pectin is a commonly used additive in the food industry. It is useful, for example, as a stabilizing agent, thickener and gelling agent in, for example, jams and other fruit-based products as well as in sour milk-based products such as yogurts. Pectin has also found other uses in the food industry, for example use as a fat replacer.

Pectin is a structural polysaccharide typically found in the form of a water insoluble parent pectic substance - protopectin - in the primary cell wall and the middle lamella of green land plants such as fruit and vegetables. Major sources of commercial pectin products are citrus peel and apple pomace in which protopectin represents 10-40% by weight of the dry matter.

Pectin is the generic designation for water-soluble compounds which result from restricted hydrolysis of protopectin. The exact nature of protopectin is not completely understood. It is, however, generally recognized that protopectin is a complex structure in which pectin is attached to other cell wall components such as cellulose, cell wall protein and hemicellulose by covalent bonds, hydrogen bonds and/or ionic interactions.

Pectin comprises linear galacturonan chains (polymer of $\alpha$-(1-4)-linked-D-galacturonic acid) which are interrupted with rhamno-galacturonan backbones (polymers of the repeating disaccharide $\alpha$-(1-4)-D-galacturonic acid-$\alpha$-(1-2)-L-rhamnose), which often has side chains of polymeric arabinogalactans glycosidic linked to the O-3 or O-4 positions of L-rhamnose. The galacturonan sequences can have D-xylose and D-apiose glycosidic linked to their O-2 or O-3 positions, which also can be substituted with ester-linked acetyl groups. The long chains of $\alpha$-(1-4)-linked D-galacturonic acid residues are commonly referred to as "smooth regions", whereas the highly branched rhamnogalacturonan regions are commonly referred to as the "hairy regions".

Pectin molecules have a molecular weight of up to more than 200,000 Da and a degree of polymerization more than 1000 units. A proportion of the carboxylic acid groups of the galacturonic acid units are methyl-esterified. In plants the residual carboxyl groups are partly or completely neutralized with cations of calcium, potassium and magnesium which inherently are contained in the plant tissues.

The "degree of esterification" (DE) means the extent to which free carboxylic acid groups contained in the galacturonic acid units of pectin have been methyl esterified. If more than 50% of the carboxyl groups are esterified then the resultant pectin is referred to as "high ester pectin" ("HE pectin" for short). If less than 50% of the carboxyl groups are esterified, then the resultant pectin is referred to as a "low ester pectin" ("LE pectin" for short or a "low methoxyl pectin"). If the pectin does not contain any - or only a few - esterified groups it is usually referred to as pectic acid.

The source of pectin will also govern to some extent whether or not other ester groups are present in the pectin structure. In this respect, it is known that some pectins comprise acetyl groups. Here typically the hydroxyl groups on $C_2$ or $C_3$ may be acetylated. By way of example, the sugar beet pectin is in some extent acetylated at O-2 and/or O-3 of the galacturonic acid residues.

The structure of pectin, in particular the degree of esterification, determines its physical and/or chemical properties. For example, pectin gelation depends on the chemical nature of pectin, especially the degree of esterification and degree of polymerization. In addition, however, pectin gelation also depends on the pectin concentration and environmental conditions like soluble solids content, the pH and calcium ion concentration.

Pectin has conventionally been produced by first extracting soluble polymers with hot weakly acidified water, then the obtained solution is filtered and concentrated and pectin is precipitated with alcohol or metal salts at a suitable pH. However, this leads to a bulk-extracted pectin fraction showing molecular variability and following a varied interaction between calcium ions and separate pectin molecules having varying affinity towards calcium ions and other charged particles. The bulk-extracted pectin products comprise molecules that represent a broad distribution of esterification degree and molecules of non-random as well as random methyl esterification pattern. This affects the important quality parameters for pectin such as breaking strength of gels, setting temperature profile, interactions with protein or cations and solubility of pectin in food manufacturing applications.

WO98/58968 describes a method for preparing separate fractions of HE pectin having improved functional characteristics over bulk-extracted pectin. In this method the starting material containing HE pectin is extracted using an aqueous extraction solution with an acidic pH extracting only a part of the pectin content in a first treatment cycle. The treated starting material can then be extracted at least one more time with other extraction media, where the pH of the extraction media in the second and possible further cycles are lower than in the immediately preceding treatment cycle. Thus, for each extraction cycle the pH gets lower and lower and the extraction solution more and more acidic.

This process is thus focused on selective extraction of pectin fractions with narrow methyl ester distributions and high functionality.

However, many pectin applications require homogeneous pectin fractions but this result in a relative low pectin yield and high production costs.

The prior art document US4016351 describes a process for preparing low methoxylated pectin in two steps: step (1) is a washing and demethoxylation step where a calcium salt is added to water used for washing the pectin-containing raw material prior to extraction. The pH in this step is 3-8. The calcium salt is used to immobilize (fix) the pectic substances in the raw material by forming insoluble calcium pectates so that soluble sugars and solids can be separated from the raw material. It is important to stress that no extraction of pectin takes place in step (1). In step (2), extraction of the fixed pectic substances is carried out using an acidic solution comprising oxalic acid and optionally another acid such as sulphuric, hydrochloric, nitric or phosphonic acid. After extraction the mixture is cooled and neutralized to pH 3-7 (pH 6 in Example 1 and pH 5-6 in Example 2) immediately prior to separation of the extracted pectin. It should be noted that no further extraction of pectin takes place during cooling and neutralization. In contrast, the present invention relates to an extraction procedure in two steps: one step at a strongly acidic pH (1.5-2.5) and a subsequent step at a higher pH than the first step (pH 2.5-7 or 7-14) and preferably in the presence of a chelating agent. The first step results in the formation of calcium-tolerant pectin and the second step results in the formation of calcium-sensitive pectin. The present process does not include an initial step of washing the pectin-containing raw material in the presence of calcium ions to immobilize the pectin, and it does not result in demethoxylated (or low methoxylated) pectin. Being so, not only the process differs from the mentioned prior art document, but also the end product.

WO00/39168 describes a method for separating the pectin batch into separate fractions with different characteristics. In this document the pectin batch comprising HE pectin is separated with regard to its sensitivity towards polyvalent cations such as calcium ions. This is performed for example by treating the starting material with a weak acidic solution in order to remove a non-calcium sensitive pectin (NCSP) aqueous extract fraction, where after the treated plant material is treated with an aqueous acid solution stronger than the weak acidic solution i.e. having a lower pH. Hereby, a fraction containing some calcium sensitive pectin (CSP) can be removed. In the first extraction step, calcium salts are to be added if pH is between 2.5 and 3.0 in order to maintain calcium sensitive pectin as insoluble.

The second fraction is a mixture of NCSP and CSP and not a pure fraction. The CSP removed is weak CSP since the major part of the more calcium sensitive pectin fractions is not acid-soluble and will not be extracted by this method. Furthermore, the use of the stronger acid conditions used for extraction of the CSP fraction depolymerize and deesterify the pectin and changes its functional properties in a negative direction.

The pectin fractions obtained by the present invention in the second extraction described in step c. is not soluble at acidic conditions. So, when we add additional CSP to the acid extract we obtain a pectin with a different functionality compared all described state of the art. This differential in the final product by the use of the claimed process also has an impact in the final applications aimed to be used in such product.

A demand is however still present in the industry for alternative ways to separate CSP from NCSP, especially if these processes result in a high yield and a high ratio of CSP compared with NCSP as well as obtaining CSP as a natural product, which is only minimally modified e.g. by depolymerization and/or deesterification as well as not being obtained for example by enzymatic modification.

Furthermore, a high extraction yield along with improved pectin functionality is attractive both from an environmental and a sustainable as well as an economic point of view due to the efficient use of the pectin containing resources.

## OBJECT OF THE INVENTION

It is the object of the invention to provide a process for extraction or isolation of calcium sensitive pectin resulting in a high yield and a high purity of calcium sensitive pectin.

## DETAILED DESCRIPTION

This object can be achieved by a process for the extraction of calcium sensitive pectin from a pectin containing starting material comprising:

    a. a first step being an acid extraction, where said starting material is subjected to extraction using an acidic solution having a pH between 1.5 - 2.5, extracting a first extract leaving a first residuum, where saidfirst extract comprises calcium tolerant pectin;

    b. optionally, a second step, where the first residuum is subjected to at least one washing resulting in a second residuum and a second extract;

c. a third step being a second extraction, where said first or second residuum is subjected to said second extraction using a third solution extracting a third extract leaving a third residuum where said third extract comprises calcium sensitive pectin; and where the pH of said third solution is higher than the pH of said acidic solution and said third solution is a chelate forming solution.

The term "pectin" is intended to mean a water-soluble form of a pectic substance obtained by separation of pectin from a plant material.

"Calcium sensitivity" is a property of pectin which results in increase of viscosity of a pectin solution in presence of calcium ions. Calcium sensitivity is a strong indicator of sensitivity to other multi-valent cations, the present invention covers sensitivity to such other cations also, for example magnesium, copper, iron, zinc, aluminum, manganese, and barium.

The content of calcium sensitive pectin in a HE pectin product can be described as the "calcium sensitive pectin ratio" (CSP-ratio or CSPR), which is the fraction of calcium sensitive pectin in a pectin product. Pure calcium sensitive pectin therefore theoretically has CSPR=1.0, a pectin which has 50% calcium sensitive pectin has CSPR=0.5 and a pure calcium tolerant pectin has CSPR=0.

High purity of calcium sensitive pectin is to be understood as the pectin fraction having a high CSPR value i.e. CSPR>0.75, such as CSPR> 0.8, for example CSPR> 0.9.

The pectin starting material can preferably be obtained from citrus fruits, apples, sugar beets, sunflower heads, vegetables or waste products from plants such as apples, sugar beets, carrots, onions, peaches, grape berries, mangos, guavas, squashes, pumpkins, tomatoes, apricots, bananas, beans, potatoes, sunflower or citrus fruits. Examples of citrus fruits are limes, lemons, grapefruits, mandarins, tangerines, pomelos, and oranges.

In order to obtain the pectin starting material, the fruits and vegetables are treated depending on the type of fruit and vegetable in a manner commonly known by persons skilled in the art. This may comprise a disintegration or pressing of the material to separate juice and oil, followed by several washes with water to remove soluble solids like sugars and residues of oil and fat. The washed material can be pressed and used directly for pectin extraction or dried to more than 85% dry matter to be safe for transport or storage.

Particularly interesting starting materials include dried peel from citrus fruits, having a dry matter content of about 85% by weight or more, preferably in the form of pieces of at the most 2 cm in length, which are obtained as described above after processing of pressed peel from the juice industry after extraction of the citrus juice and the essential oils. These materials all have a high content of pectic substances in the form of water-insoluble protopectin. Citrus peel having a content of extractable pectin in the range of 20-35 wt% on a dry matter basis is particularly interesting.

In term of this invention "calcium tolerant pectin" is to be understood as similar to "non-calcium sensitive pectin".

In the first step, an acid extraction is performed with an acidic solution and at a certain pH, which combined with a temperature and time results in the extraction of a majority of calcium tolerant pectin and some calcium sensitive pectin into the solution from the pectin starting material. This acid solution forms a first extract from which the calcium tolerant pectin enriched fraction can be purified using techniques as further described below. The first step further leaves a first residuum, which is the pectin containing starting material minus the fraction extracted by the acidic solution that comprises mainly calcium tolerant pectin.

In one embodiment, the pH of the acidic solution is 2-2.5.

At this pH, a major amount of calcium tolerant pectin but only a minor amount of CSP will be extracted from the pectin containing starting material.

In order to optimize the extraction of mainly calcium tolerant pectin further, extraction temperature and time of extraction are adjusted accordingly.

In one embodiment, the temperature of said acid extraction is between 15-100°C. In a further embodiment, the acid extraction is carried out between 60-75°C.

In a further embodiment, the acid extraction is carried out for a period of time from 0.5 to 10 hours. In a still further embodiment, the acid extraction is carried out from 1 to 8 hours.

The amount of extraction solution to be used in the acid extraction as described in the first step depends for example on the origin and the condition of the pectin-containing material to be extracted and the content of extractable pectin in the material.

In accordance with the invention, the amount of pectin-containing material and extraction solution in each extraction step, which is carried out while gently stirring the suspension of pectin-containing material, is chosen so that the suspension has a dry matter content which is in the range of 1% to 20% by weight e.g. in the range of from 2% to 15% by weight such as in the range of from 2% to 6%.

Different solutions can be for the acid extraction such as an organic or an inorganic acid. Useful acids include strong or medium strong inorganic acids as exemplified by but not limited to hydrochloric acid, sulphuric acid, sulphurous acid, nitric acid or phosphoric acid. Organic acids include but are not limited to formic acid, acetic acid, propionic acid, citric acid, malonic acid, succinic acid, tartaric acid, oxalic acid, glyoxalic acid, lactic acid, glycerolic acid, maleic acid, fumaric acid and benzoic acid. It is to be understood that mixtures of acids may be used.

The second step (first washing step) is optional and can thus be left out. However, an even higher calcium sensitive pectin ratio (CSPR) is achieved in the third step when washing between the first and second extraction takes place.

If the second step is left out it is to be understood that the acid extraction is followed by the second extraction. Thus, the first residuum obtained by the acid extraction (first step) forms the basis for the second extraction (third step).

Thus, the object of the present invention can also be achieved by a process for the extraction of calcium sensitive pectin from a pectin containing starting material comprising:

a. a first step being an acid extraction, where said starting material is subjected to extraction using an acidic solution extracting a first extract leaving a first residuum, where said first extract comprises calcium tolerant pectin;

b. a further step being a second extraction, where said first residuum is subjected to a second extraction using a second solution extracting a second extract leaving a second residuum where said second extract comprises calcium sensitive pectin; and where the pH of said second solution is higher than the pH of said acidic solution.

In a further embodiment, at least one first washing is performed between the acid extraction and the second extraction.

In this first washing step, the first residuum can be washed in order to remove remains of the acidic solution as well as of the first extract. The first washing step removes remains of acidic solution and extracted (or solubilized) calcium tolerant pectin and extracts some additional pectin from the first residuum changing it to a second residuum. A second extract which comprises the washing solution and the remains of the acidic solution and additionally extracted calcium tolerant pectin is further obtained from the first washing step.

In the first washing step the first residuum is subjected to at least one washing. Hereby is to be understood that the first residuum can be washed one time, that the first residuum can be washed two times or that the first residuum can be washed three times etc. and that the resultant residuum remaining from the washing process(es) is to be considered as the second residuum.

The washing can be performed using for example continuous counter-current wash or wash by a percolation process. The washing can e.g. be performed as a continuous wash on a stationary filter or as a counter-current wash.

In one embodiment, the solution(s) from one or more washings are mixed into a second extract. In a further embodiment, the solution(s) from subsequent washings are kept separate as a first second extract, a second second extract; a third second extract etc. and the pectin can be isolated from each of the second extracts separately.

The number of washings necessary is dependent upon the original starting material as well as the extraction parameters as such i.e. pH, temperature, solution, time of extraction etc. Hence, the number of washings is to be adjusted accordingly in order to make sure that traces of the acidic solution as well as the calcium tolerant pectin extracted in the first step are removed.

The amount of washing solution to be used in the washing as described in the second step depends on the origin and the condition of the pectin-containing material, the washing solution, the acid extraction solution and the content of extractable pectin in the material.

In one embodiment, the washing is performed in a ratio of washing solution:dry plant material from 5:1 to 50:1. This means that if 100 kg dry plant material is used as a pectin containing starting material it is to be washed with 500 to 5000 kg of the washing solution.

In a further embodiment, the washing is performed in a ratio of washing solution:dry plant material around 15:1.

In a further embodiment, at least one of said at least one washing is performed with water. In a still further embodiment, at least one of said at least one washing is performed with water at temperature between 50-80 °C.

Alternatively, the washing can be performed using weakly acidified water or weakly acidified hot water with a higher pH than the pH of the acidic solution used in the first extraction step.

The first washing step is performed at a certain pH and with a solution for a time and at a temperature, which allows optimal washing in order for the remains to be efficiently removed. If this step is included, this enables a pectin fraction (third extract) to be obtained in the third step having a high purity of CSP.

In one embodiment, the washing is performed at a temperature between 20 °C to 90 °C. In a further embodiment, the washing is performed at a temperature between 65 °C to 75°C.

In a further embodiment, the washing is performed for between 15 min to 2 hours. In a still further embodiment, the washing is performed for between 30 min and 60 min.

The second extraction is performed with a third solution and at a pH, which combined with a temperature and time results in the extraction of major amounts of CSP into the solution from the pectin starting material. The solution extracts CSP from the second residuum resulting in a third residuum which is the second residuum minus the pectin fraction extracted which is mainly CSP. The extracted pectin and the third solution forms a third extract from which the CSP can be purified using techniques as further described below.

If the first washing is omitted, the second extraction will follow the acid extraction and the third solution as described herein will be the second solution. The CSP will be extracted from the first residuum resulting in a second residuum which is the first residuum minus the pectin fraction extracted which is mainly CSP. The extracted pectin and the second solution forms a second extract from which the CSP can be purified using techniques as further described below.

It has surprisingly been found that having a second extraction after an acid extraction results in the release of a considerable extra amount of pectin in addition to the acid-extracted pectin fraction. The pectin in the third extract or in the second extract if the first washing step is omitted is significantly different from the first fraction with regard to chemical characteristics as well as functional pectin properties. The acid extraction appears to remove pectic material and create access to extraction of more Ca-reactive pectin fractions, which cannot be extracted by exclusively using a single acid extraction or continued use of acid extraction.

In order to obtain a high yield and a highly pure fraction of CSP it is important that the pH of the third solution is higher than the pH of the acidic solution used in the first extraction step. Thus, the pH during second extraction is higher than the pH during the acid extraction.

If the first washing is omitted, the second extraction will follow the acid extraction and the third solution as described herein will be the second solution. The pH of the second solution is higher than the pH of the acidic solution used in the first extraction step. Thus, the pH during second extraction is higher than the pH during the acid extraction.

In one embodiment, the pH of said third solution is from 2.5 to 7.

If the first washing is omitted, the second extraction will follow the acid extraction and the third solution as described herein will be the second solution. The pH of said second solution is from 2.5 to 7.

In a further embodiment, the pH of said third solution is from 2.5 to 6.9, said third solution being a weak acidic solution.

If the first washing is omitted, the second extraction will follow the acid extraction and the third solution as described herein will be the second solution. The pH of said second solution is from 2.5 to 6.9, said second solution being a weak acidic solution

In a still further embodiment, the pH of said third solution is from 2.5 to 4, said third solution being a weak acidic solution.

If the first washing is omitted, the second extraction will follow the acid extraction and the third solution as described herein will be the second solution. The pH of said second solution is from 2.5 to 4, said second solution being a weak acidic solution.

In a still further embodiment, the pH of the third solution is from 4 to 6, said third solution being a weak acidic solution.

If the first washing is omitted, the second extraction will follow the acid extraction and the third solution as described herein will be the second solution. The pH of the second solution is from 4 to 6, said second solution being a weak acidic solution.

In a still further embodiment, the third solution comprises one or more of salts of partially neutralized inorganic acids like polyphosphate, borate, phosphate, pyrophosphate, phosphonates, hydrogen carbonate, hydrogen sulphate, zeolites, cationic organic resins, salts of partially neutralized organic acids or polycarboxylates such as tartrate, citrate, oxalate, gluconate, EDTA (ethylenediamine tetra acetic acid), DTPA (diethylenetriamine penta acetic acid), NTA (nitrilo triacetate), imidazole and derivates.

If the first washing is omitted, the second extraction will follow the acid extraction and the third solution as described herein will be the second solution. The second solution comprises one or more of salts of partially neutralized inorganic acids like polyphosphate, borate, phosphate, pyrophosphate, phosphonates, hydrogen carbonate, hydrogen sulphate, zeolites, cationic organic resins, salts of partially neutralized organic acids or polycarboxylates such as tartrate, citrate, oxalate, gluconate, EDTA (ethylenediamine tetra acetic acid), DTPA (diethylenetriamine penta acetic acid), NTA (nitrilo triacetate), imidazole and derivates.

In a further process, the third solution is a chelate forming solution. Hereby is to be understood that the third solution comprises chelating agents and thus, has a chelating function, i.e. being able to form complex(es) with di- or multivalent cations.

If the first washing is omitted, the second extraction will follow the acid extraction and the third solution as described herein will be the second solution. The second solution is a chelate forming solution

Hereby, the di- or multivalent cations are bound by the chelating agents used for the second extraction and the CSP is maintained soluble. Thus, a higher fraction of the CSP is extracted resulting in a higher yield of CSP. It was surprisingly found that the acid extraction appears to remove pectic material and create access to extraction of more Ca-reactive pectin fractions by chelating agents. Chelating agents alone are not sufficient.

In one embodiment, the chelate forming solution comprises one or more of the following: polyphosphates, citric acid or its salts, oxalic acid or its salts, phosphoric acid or its salts, salts of partly neutralized di- or multivalent organic acids like EDTA, CDTA, DTPA, NTA, imidazole, carbonic acid or cationic ion exchange resins.

In one embodiment, the pH of the third solution is from 7 to 14. In a further embodiment, the pH of the third solution is from 7.1 to 14 (base solution). In another embodiment, the pH of the third solution is from 8 to 12 (base solution). In a still further embodiment, the pH of the third solution is from 4 to 12. In a further embodiment, the pH of said third solution is from 8 to 10 (base solution). In a still further embodiment, the pH of the third solution is from 10 to 12 (base solution).

If the first washing is omitted, the second extraction will follow the acid extraction and the third solution as described herein will be the second solution. The pH of the second solution is from 7 to 14. In a further embodiment, the pH of the third solution is from 7.1 to 14 (base solution). In another embodiment, the pH of the third solution is from 8 to 12 (base solution). In a still further embodiment, the pH of the third solution is from 4 to 12. In a further embodiment, the pH of said third solution is from 8 to 10 (base solution). In a still further embodiment, the pH of the third solution is from 10 to 12 (base solution).

Depending on the overall extraction conditions, the lower basic pH ranges such as for example pH 8-10 result in less depolymerisation and deesterification of extracted pectin than extraction at a higher pH.

In a still further embodiment, said third solution comprises one or more base or basic salts with mono- or divalent cations. Examples of such are carbonates, hydrogen carbonates as well as hydroxides of lithium, sodium, potassium, ammonium, calcium and magnesium.

If the first washing is omitted, the second extraction will follow the acid extraction and the third solution as described herein will be the second solution. The second solution comprises one or more base or basic salts with mono- or divalent cations.

In order to optimize the extraction of CSP further, extraction temperature and time of extraction can be adjusted.

In one embodiment, the second extraction is carried out for a period of time from 0.5 to 5 hours.

In one embodiment, the temperature of said second extraction is between 0-100°C. In a further embodiment, the temperature of the second extraction is between 65-75°C. In another embodiment, the temperature is between 20-65 °C.

In one embodiment when using an alkaline extraction i.e. where the pH of the third solution is above 7, the temperature of said alkaline extraction is between 0-75°C. In a further embodiment, the temperature of the alkaline extraction is between 0-25°C or between 20-50°C.

If the first washing is omitted, the second extraction will follow the acid extraction and the third solution as described herein will be the second solution. In one embodiment when using an alkaline extraction i.e. where the pH of the second solution is above 7, the temperature of said alkaline extraction is between 0-75°C. In a further embodiment, the temperature of the alkaline extraction is between 0-25°C or between 20-50°C.

In a further embodiment, the process comprises a fourth step, where said third residuum is subjected to at least one washing resulting in a fourth extract and a fourth residuum.

If the first washing is omitted, the second extraction will follow the acid extraction and the third solution as described herein will be the second solution. The second residuum is subjected to at least one washing resulting in a third extract and a third residuum.

Hereby, the residuum is washed in order to remove remains of CSP sticking to the third residuum (second residuum if first washing is omitted). The washing solution - at least in some degree - extracts components from the first residuum. The fourth step removes remains of CSP from the third residuum changing it to a fourth residuum. A fourth extract which comprises the washing solution and the remains of the third solution and extracted CSP is further obtained from the fourth step.

In the fourth step (second washing), the third residuum is subjected to at least one washing. Hereby is to be understood that the third residuum can be washed one time, that the third residuum can be washed two times, that the third residuum can be washed three times etc. and that the resultant residuum remaining from the washing process(es) is to be considered as the fourth residuum. The washing can be performed using for example continuous counter-current wash or wash by a percolation process.

In one embodiment, the solution(s) from one or more washings are mixed into a fourth extract. In a further embodiment, the solution(s) from subsequent washings are kept separate as a first fourth extract, a second fourth extract; a third fourth extract etc. and the CSP can be isolated from each of the fourth extracts separately.

The number of washings necessary is dependent upon the original starting material as well as the extraction parameters as such i.e. pH, temperature, solution, time of extraction etc. Hence, the number of washings is to be adjusted in order to make sure that remains of CSP are removed from the third residuum.

The amount of washing solution to be used in the fourth step depends i.e. on the origin and the condition of the pectin-containing material, the third solution, the washing solution and the content of extractable pectin in the material.

In one embodiment, the washing is performed in a ratio of washing solution:dry plant material from 5:1 to 50:1. This means that if 100 kg dry plant material is used as pectin containing starting material it is to be washed with 500 to 5000 kg of the washing solution.

In a further embodiment, the washing is performed in a ratio of washing solution:dry plant material around 15:1.

In a further embodiment, at least one of said at least one washing is performed with water.

Alternatively, the washing can be performed using weakly acidified or alkaline water with a higher pH than the pH of the acidic solution used in the first extraction step but not higher than the pH of the third solution.

The fourth step is performed at a pH and with a solution for a time and at a temperature, which allows optimal washing in order for the remains to be efficiently removed.

In one embodiment, the washing is performed at a temperature between 0 °C to 80 °C. In a further embodiment, the washing is performed at a temperature between 0°C to 20°C. In a still further embodiment, the washing is performed at a temperature between 50°C to 80°C.

In a further embodiment, the washing is performed for between 10 min to 2 hours.

In a still further embodiment, the washing is performed for between 30 min and 90 min.

In a further embodiment, two or more of the extracts are mixed forming a mixed extract. Hereby, the amount of calcium tolerant pectin and/or CSP in the final mixed extract is higher and consequently the yield finally obtained will be higher as well as the work load by purifying one extract instead of two or more will be less.

In one embodiment, the mixed extract comprises calcium tolerant pectin or CSP. In a further embodiment, the mixed extract is two mixed extracts - a first mixed extract comprising mainly calcium tolerant pectin and a second mixed extract comprising mainly CSP.

Thus, in one embodiment the third extract and said fourth extract are mixed forming a fifth extract.

In a further embodiment, the first extract and said second extract are mixed forming a sixth extract.

In a still further embodiment, the first extract, said second extract, said third extract and said fourth extract are mixed forming a seventh extract.

In a further embodiment, the first extract is separated from said first residuum, said second extract is separated from said second residuum, said third extract is separated from said third residuum and/or said fourth extract is separated from said fourth residuum by filtration, wet-sieving, decantation or centrifugation.

The separation processes are performed by techniques commonly known to the person skilled in the art and can as such be performed by these persons skilled in the art using their common general knowledge. The separation is performed between the separate steps of the process before isolating the pectin from the extracts or using the residues in further steps in the process.

In a further process, said starting material has been subjected to a pre-treatment.

The pre-treatment can be performed in order to change the particle size distribution of the raw material by milling the dry peel or by cutting down the material in an aqueous peel suspension.

In a still further process, said starting material is in a fresh, frozen or dried state.

Drying of the material can be carried out by means of any conventional drying equipment such as a drying oven, a belt dryer, a drum dryer or a fluid bed dryer for a period of time sufficient to obtain a dry matter content in the material of at least 80% by weight. In one embodiment, the dry matter content in the material is at least 90% by weight. The drying is carried out at a temperature ranging from ambient temperature to above 100°C for a period of at most 36 hours. In one embodiment, the drying is carried out at a temperature in the range of from 40°C to 100°C, for a period of at most 36 hours. In one embodiment, the drying can be carried out at pressures below atmospheric pressures, whereby a relatively lower drying temperature or a comparatively shorter drying period can be used resulting in a more gentle treatment.

In a further process, pectin is further purified from said first extract, said second extract, said third extract, said fourth extract, said fifth extract, said sixth extract and/or said seventh extract by centrifugation, filtration, ion-exchanging, concentrating, precipitating, washing, pressing, drying and milling.

The extracted pectin may be recovered from the individual extracts or mixed extracts by any convenient method.

All of these methods can be performed as known to the person skilled in the art.

In a still further process, the precipitating is performed using 2-propanol.

The precipitation of pectin can be performed with any solution which is water-miscible and in which pectin is substantially insoluble. The precipitated pectin is separated from the liquid by any convenient method, such as for example by decantation, centrifugation or filtration, and the precipitate can then be pressed and washed on the filter to remove soluble salts and impurities. Finally, the pectin can be dried and optionally grinded before use.

The precipitation of pectin by 2-propanol or other alternative solutions from the extract can be preceded by a concentration of the pectin for example by membrane filtration or by evaporation under reduced pressure.

Alternative solutions for precipitation of pectin may be monohydric alcohol, for example methanol, ethanol, tert-butanol, sec-butanol, n-butanol, tert-amyl alcohol, neopentyl alcohol, sec-amyl alcohol or diethylcarbinol; a dihydric alcohol for example ethylene glycol, propylene glycol or tetramethyleneglycol; a ketone, for example acetone, methyl ethyl ketone, methyl isobutyl ketone or methyl tert-butyl ketone; or a glycol ether, for example diethylene glycol monomethylether, ethylene glycol monoethylether, diethylene glycol monomethylether or triethylene glycol dimethylether. Mixtures of two or more of such solutions may also be used in the precipitation of the pectin.

This invention furthermore describes a pectin fraction as obtained/obtainable by the process as described above where the calcium sensitive pectin ratio (CSPR) is above 0.75. In a further embodiment the calcium sensitive pectin ratio (CSPR) is above 0.80. In a further embodiment, the calcium sensitive pectin ratio (CSPR) is above 0.85. In a further embodiment, the calcium sensitive pectin ratio (CSPR) is above 0.9.

In a further embodiment, a pectin fraction is described where the degree of esterification (DE) is above 50%. In a further embodiment, the degree of esterification (DE) is above 55%. In a further embodiment, the degree of esterification (DE) is above 60%. In a further embodiment, the degree of esterification (DE) is above 65%.

In one embodiment, the CSPR is above 0.75 and the DE is above 50%.

In a further embodiment, the CSPR is above 0.8 and the DE is above 50%.

In a further embodiment, the CSPR is above 0.9 and the DE is above 50%.

In a further embodiment, the CSPR is above 0.75 and the DE is above 60%.

In a further embodiment, the CSPR is above 0.8 and the DE is above 60%.

In a further embodiment, the CSPR is above 0.9 and the DE is above 60%.

This pectin fraction obtained by the process i.e. the extracts obtained in the different steps includes fractions of pectins with different properties such as fractions comprising mainly calcium tolerant pectin and fractions comprising mainly CSP. Thus, the extracts have different CSPR levels.

From the process it is possible to obtain extracts comprising a high level of CSP and thus having a high CSPR. Furthermore, since this process is performed without addition of enzymes and under sensible conditions the pectin is only modestly deesterified and depolymerised. A particular pectin fraction can thus be obtained.

This invention furthermore describes a use of pectin as obtained by the process described above, where the pectin is used for stabilizing beverages and for structuring acidified dairy products.

Furthermore, a use is described where the beverage is acidified milk or diluted fruit juices.

In one embodiment, the pectin fraction comprising mainly CSP i.e. with a CSPR above 0.75 is used for this purpose.

In one embodiment, the acidified milk products is selected from acidified milk products e.g. having a pH of 3.5 to 5, such as acidified milk, drinking yogurt and yogurt with fruit.

The acidified milk products comprise milk products obtained by acidification either through fermentation with live acid producing bacteria or by addition of fruit juices or food acids.

Furthermore, a use is described where the pectin is used as a stabilizer in dairy desserts.

This invention furthermore describes a use of pectin as obtained by the process described above, where the pectin is used as a dietary fiber, as a gelling agent and/or as a protein binding agent. The pectin fraction comprising mainly CSP i.e. with a CSPR above 0.75 is used for this purpose.

The pectin can further be used as soluble fibre (optionally: as Ca-salt), carrier of nutrients (Fe, Ca, Zn), binder of radionuclides in food, precursor for conventional low ester pectin or amidated pectin, protein binder for protein recovery from process water in food plants and protein flocculant in waste water plants, encapsulation agent and dye binder.

## EXAMPLES

### Methods

#### Determination of degree of esterification (DE)

The degree of esterification was determined according to the procedures given in Food Chemical Codex, Third Edition, National Academic Press, Washington 1981, page 216.

Weigh 5 g of the pectin sample to the nearest 0.1 mg into a 250 ml beaker and add a mixture of 100 ml 60% aqueous 2-propanol and 5 ml conc. hydrochloric acid. Stir on a magnetic stirrer for 10 minutes. Filter through a dried and pre-weighed 30 ml coarse glass filter funnel with reduced vacuum. Wash with six 15 ml portions of HCl-60% 2-propanol mixture. Then wash with 60% aqueous 2-propanol (6-8 portions of 20 ml) until the filtrate is free from chloride (test with a solution of 1.7 g silver nitrate in 100 ml of distilled water). Finally wash with approx. 30 ml of 100% 2-propanol. Dry for 2½ hours in an oven at 105°C. Cool in a desiccator. Weigh.

Pipette 20.00 ml of 0.5 N sodium hydroxide using 20 ml volumetric pipette into a beaker and mix with 20.00 ml of 0.5 N hydrochloric acid, which has been transferred using a 20 ml volumetric pipette. Add two drops of a solution of phenolphthalein (1 g of phenolphthalein is dissolved in 100 ml of 96% ethanol) indicator and titrate with 0.1 N sodium hydroxide. Record the volume $V_0$.

Weigh exactly one tenth of the washed and dried pectin into a 250 ml Erlenmeyer flask and moisten with 2 ml 96% ethanol. Place the flask on a magnetic stirrer and slowly add 100 ml of boiled and cooled deionised water. Avoid splashing. Stir until all the pectin is completely dissolved. Add five drops of the solution of phenolphthalein and titrate with 0.1 N sodium hydroxide. The volume is recorded as $V_1$ in ml. Add 20.00 ml of 0.5 N sodium hydroxide, and shake vigorously. Allow the content to rest for 15 minutes in order to saponify the ester groups. Add 20.00 ml 0.5 N hydrochloric acid and shake until the pink color disappears. Add three drops of the solution of phenolphthalein and titrate with 0.1 N sodium hydroxide until achieving a faint persisting pink color, recording the volume of 0.1 N sodium hydroxide required as $V_2$ ml.

$$\%DE = \frac{V_2 - V_0}{V_1 + V_2 - V_0} * 100 \,.$$

Determination of intrinsic viscosity

Intrinsic viscosity was determined by extrapolation the function reduced viscosity divided by the pectin concentration to zero concentration. At a given concentration the reduced viscosity was:

$$\frac{\eta_c - \eta_r}{\eta_r}$$

Where $\eta_c$ is the viscosity of the pectin solution, $\eta_r$ is the viscosity of the solvent (1% aqueous solution of sodium polyphosphate, pH 4.75). The viscosities were measured on a Viscometer C (Haake, Gmbh), at 21.0 °C, with a glass ball.

Determination of US SAG°

US SAG° was determined according to the method described in Food Tech. 1959 13 (9), pp. 496-500.

Determination of CSP ratio (CSPR)

2.00 g pectin was dissolved in approx. 90 g demineralised water at 70 °C. After cooling to room temperature, pH was increased to 4.0 by addition of 20% by weight sodium carbonate solution during stirring. Demineralised water was added to 100.0 g total weight and the sample was mixed.

15.00 g of the sample was slowly mixed into 30.00 g 80% by weight aqueous 2-propanol in a 50 ml centrifuge screw cap tube to precipitate the pectin. After one hour with frequent shaking, the precipitated material was collected after centrifugation at 2800 g for 20 minutes and decantation of the centrifugate. To the precipitated material was added approx. 25 ml 60% by weight aqueous 2-propanol and it was thoroughly mixed. After one hour with frequent mixing, the precipitate was separated as above. The wash with 60% by weight 2-propanol was repeated once again and after final separation excess liquid was pressed of by hand and the pressed residue transferred to a tray and dried over night at 60 °C in a ventilated oven. The isolated pectin was weighed (a gram) and the dry matter a' was determined in the material by drying at 105 °C for 2½ hours.

In a 50 ml centrifuge screw cap tube was added 25.00 g 60 mM CaCl$_2$ in demineralised water containing 16% by weight 2-propanol and mixed with 25.00 g of the prepared pectin sample. The mixture was shaken at lowest speed on an IKA MTS2 Schütler, which was connected to a timer to allow mixing for 1 out of 15 minutes. After 24 hours the mixture was centrifuged at 2800 g for 20 minutes and the liquid siphoned off through a cloth. The precipitated material in the centrifuge tube was weighed and an equal amount of 30 mM CaCl$_2$ in demineralised water containing 8% by weight 2-propanol was added and mixed. The tube was slowly shaken for another 24 hours and centrifuged at 2800 g for 20 minutes and the liquid siphoned off through a cloth. The wash of precipitated CSP was repeated once more. The residue in the tube was finally mixed with two parts of 80% by weight aqueous 2-propanol, and after one hour separated on the cotton cloth, and after draining transferred back to the tube and mixed again twice with equal amount of 60% by weight aqueous 2-propanol and after one hour drained and pressed in the cloth. The press residue was transferred to a tray and dried overnight at 60 °C in a ventilated oven. The residue was weighed (b gram) and the dry matter b' of the material was determined by drying at 105 °C for 2½ hours.

CSP ratio was determined from:

$$\text{CSP ratio} = \frac{b * b'}{a * a'}$$

CSPR-figures above 1.0 can be achieved because the precipitation of particular small pectin molecules in presence of calcium is more quantitative than the 2-propanol precipitation. A CSPR figure above 1.0 indicates that the sample is pure calcium sensitive pectin.

Example 1: Combined extracts

In one experiment the extracts were combined in order to obtain a heterogeneous pectin fraction with a high yield and a high amount of CSP.

Materials

The citrus peel raw materials were extracted in a water: peel (w:p) ratio of 27 at 70°C at pH 2.0 for three hours. Excess liquid was then separated by sieve and the first residuum was washed for one hour at 70°C with water added to constitute a w:p ratio of 12. After a second sieving the second residuum including the sludge from centrifugation of the separated liquid was further extracted at 70°C for two hours with 15 g oxalic acid monohydrate per kg citrus peel at pH 3.8±0.2 (adjusted with sodium carbonate solution) and w:p ratio 19. The mixture was then separated by centrifugation. The third residuum was washed again with a w:p ratio of 14 for ½ hour at 70°C and the liquid was separated by centrifugation.

The liquid phases from the centrifugations were mixed and clarified by passing the liquid through a vacuum filter with a layer of Clarcel DIT-R filter aid. The clarified juice was ion-exchanged through a weak-acidified Amberlite C200 resin, essentially in sodium form. The refined pectin juice was concentrated by ultrafiltration to 1.5-2.0% pectin concentration and precipitated in 55% by weight final concentration of 2-propanol. The precipitated material was pressed, washed with 60% by weight 2-propanol and finally pressed again before drying in a ventilated oven at 45°C overnight. The dry material was weighed and milled to pass a 0.5 mm sieve.

Pectin yield

The pectin yield from an extraction/washing step is the amount of pectin (calculated as pectin dry matter), which during the extraction/washing step is transformed from insoluble protopectin to soluble pectin, calculated as percentage of the peel material (calculated as dry matter).

The pectin yield is determined for each extraction/washing step by determining the pectin concentration in the clarified extract (by precipitation of a weighed amount of concentrate into 1.2 volumes of 2-propanol, wash of the precipitate with 60% by weight 2-propanol, drying to 100% dry matter and weighing of the residue). From the total amount of extract/washing liquid and the determined pectin concentration, the total amount of soluble pectin is calculated. From this the soluble pectin transferred with the peel residuum from the preceding extraction/wash is calculated from the amount of transferred peel residuum and the pectin concentration in the clarified liquid, determined from the preceding extraction/washing step. This amount of pectin transferred from the preceding extraction/washing step is subtracted from the total amount of pectin found in the extraction/washing step, and the difference gives the yield of pectin from the extraction or washing step.

Results

The pectin yield, the degree of esterification, the intrinsic viscosity, the calcium sensitive pectin ratio and US SAG° were measured for different types of citrus fruits as illustrated in table 1 below. These parameters were measured as described under materials and methods.

**Table 1**

| Raw material | Orange peel | Lime peel | Grapefruit peel |
|---|---|---|---|
| Pectin yield | 29.0% | 29.5% | 26.3% |
| DE | 67.4% | 69.5% | 68.1% |
| Intrinsic viscosity (L/g) | 0.44 | 0.44 | 0.45 |
| CSPR | 0.76 | 0.38 | 0.76 |
| US SAG° | 206 | 246 | 242 |
| DE: degree of esterification; CSPR: calcium sensitive pectin ratio | | | |

Variation is observed between different citrus peels. However, a high yield of pectin is observed ranging from 26-30%. The purified heterogeneous fraction shows a relatively high CSP ratio though this is fruit dependent as well except for lime peel, which is known to have the highest content of calcium tolerant pectin.

**Example 2: Isolation of separate extracts.**

Materials

400±0.1 g dry citrus peel was suspended into 9.6±0.1 L demineralised water in a thermostatic controlled 10 L stirred reactor and heated to the chosen temperature. pH was lowered to the chosen pH by addition of 32% by weight nitric acid to the stirred mixture until pH was stable. At the end of the chosen extraction time (determined from addition of the main part of nitric acid until separation), the total content in the reactor was weighed and the content was poured into colanders and separated into peel residue and filtrate, using plastic bag covers to reduce evaporation.

The extracted peel residue was weighed and transferred back to the stirred reactor and hot demineralised water was added to a total volume of 6 L. After stirring at the given temperature and time the content was again weighed and separated on the colanders given a filtrate from the first wash and a peel washing residue.

The peel washing residue was weighed and transferred to the stirred reactor and hot water was added to give a total content of 8 L. The predetermined temperature was found and the extractant (10 g sodium polyphosphate, or 5.3 g sodium oxalate, dihydrate, or 50 ml Amberlite 200C, or pH adjusting with 20% aqueous sodium carbonate or 1N sodium hydroxide to the chosen pH) was added and pH adjusted until being constant at the chosen value. The predetermined reaction time was chosen from start of pH adjustment until weighing of the total reactor content, before separation on the colanders. The separated extracted peel residue was weighed.

Pectin was isolated from the colander filtrates by the following procedure. The hot filtrate was centrifuged in closed bottles for 12 min at 4500 RPM in a centrifuge. A weighed amount of centrifugate was precipitated in 1.5 volumes of stirred 100% 2-propanol. The pH of the stirred precipitate was adjusted with 20% sodium carbonate or 32% by weight nitric acid until pH 3.0±0.2. After stirring for one hour the precipitated material was collected by filtration through a cotton cloth, hand-pressed and suspended again into 60% by weight 2-propanol for one hour before final draining and pressing in the cloth. The pressed material was dried in a tray at 45 °C during the night and weighed.

Dry matter was determined in the isolated pectin and the raw material by drying at 105 °C for 4 hours.

Pectin yield

The pectin yield was determined for each extraction step by calculation of the pectin concentration from the isolated amount of pectin (on dry matter basis) in relation to the amount of precipitated centrifugate. Same pectin concentration should be found in the liquid phase of the total extraction mixture and in the liquid phase of the pectin extraction residue, assuming no dilution or evaporation during the separation procedures. This means the amount of extracted pectin can be calculated by multiplying the weight of pectin extract (minus the weight of added dry peel) with the pectin concentration in the liquid phase. In same way the amount of extracted pectin transferred with the peel extraction residue to the next washing/extraction process can be determined and by subtraction of this amount from the determined amount of extracted pectin in the next washing/extraction process, the net extracted pectin from this processing step can be calculated etc. This calculation allows determination of the net extraction yield in each extraction/washing step.

**Experiment 2a - High pectin yield**

Several experiments were conducted using different extractants, different extraction temperature, pH and different extraction time. Table 2 illustrates the different experiments where the orange peel from 2013 is in step 1 (first step) extracted with a first extractant, hereafter it is washed with hot demineralised water in step 2 (second step), extracted with a second extractant in step 3 (third step). For some of the experiments, an additional wash is performed after the second extraction in step 4 (fourth step).

The pectin yield for each of the steps is given in the Table 2 as well as the total yield is consecutively calculated.

However, for each of the experiments it can be seen in Table 2 that using more extraction steps increases the total yield of pectin obtained from the peel. Further having an additional washing step (step 4) increases the total yield even more.

**Table 2**

| Step | Temp. °C | Time hrs | pH | Ex. | Yield | cYield | DE | Intrinsic viscosity L/g | CSPR | US SAG° |
|---|---|---|---|---|---|---|---|---|---|---|
| 1 | 70 | 3 | 2.0 | H$^+$ | 13.5% | 13.5% | 70.7% | 0.44 | 0.33 | 197 |
| 2 | 70 | 1 | 2.3 | | 3.4% | 16.9% | 70.1% | 0.41 | 0.65 | |
| 3 | 70 | 2 | 4.0 | NaPP | 8.7% | 25.6% | 57.5% | 0.37 | 0.96 | 220 |

(continued)

| Step | Temp. °C | Time hrs | pH | Ex. | Yield | cYield | DE | Intrinsic viscosity L/g | CSPR | US SAG° |
|---|---|---|---|---|---|---|---|---|---|---|
| 4 | 70 | 1 | 4.4 | | 5.8% | 31.4% | 58.2% | 0.34 | 0.96 | |
| Ex.: Extractant; DE: degree of esterification; Yield: yield generated pr. step; cYield: cumulated pectin yield; CSPR: calcium sensitive pectin ratio; $H^+$: 32% nitric acid added to achieve pH; NaPP: Sodium polyphosphate; | | | | | | | | | | |

**Experiment 2b - Importance of low pH in first step**

Experiments were carried out using orange peel from 2013 as starting material. In the experiment the orange peel was subjected to an extraction according to the invention first subjecting the peel to a first extraction with a strong acid, a washing and then a second extraction using higher pH and NaPP and finally an additional washing. A comparative experiment was performed where NaPP was used at equal pH in the first extraction step and the strong acid in the second extraction step. In the comparative experiment, washings were performed as for the experiment. All steps in the experiments were performed at 70°C.

As can be seen in table 3 below, the calcium sensitive pectin ratio (CSPR) obtained by a two-step extraction method as described in this invention is considerably higher than if the first extraction was performed at a higher pH than the second extraction step. Thus, the CSPR of the pectin fraction obtained in step 3 after the second extraction as well as in the wash after the second extraction (step 4) according to the invention is increased.

Furthermore, the cumulative pectin yield is increased.

## Table 3

| Exp. | Step | Time hrs | pH | Ex. | Yield | cYield | DE | Intrinsic viscosity L/g | CSPR |
|---|---|---|---|---|---|---|---|---|---|
| I | 1 | 3 | 2.0 | $H^+$ | 13.5% | 13.5% | 70.7% | 0.44 | 0.33 |
| | 2 | 1 | 2.3 | | 3.4% | 16.9% | 70.1% | 0.41 | 0.65 |
| | 3 | 2 | 4.0 | NaPP | 8.7% | 25.6% | 57.5% | 0.37 | 0.96 |
| | 4 | 1 | 4.4 | | 5.8% | 31.4% | 58.2% | 0.34 | 0.96 |
| V | 1 | 2 | 4.0 | NaPP | 2.7% | 2.7% | 74.2% | 0.30 | |
| | 2 | 1 | 4.2 | | -0.3% | 2.4% | 75.0% | 0.37 | |
| | 3 | 3 | 2.0 | $H^+$ | 12.4% | 14.8% | 67.9% | 0.51 | 0.46 |
| | 4 | 1 | 2.3 | | 4.3% | 19.1% | 66.6% | 0.44 | 0.70 |

I: Experiment according to present invention; V: Comparative experiment.; Ex.: Extractant; cYield: cumulated pectin yield; DE: degree of esterification; CSPR: calcium sensitive pectin ratio; Yield: yield generated pr. step; $H^+$: 32% nitric acid added to achieve pH; NaPP: Sodium polyphosphate

**Experiment 2c - Importance of washing for the purity of CSP**

Comparative studies were performed in order to illustrate the importance of the washing between the two extraction steps.

Orange peel from 2013 was extracted with a strong acid in a first extraction step (step 1) and with NaPP in a second extraction step (step 3). Comparative studies were made having a washing step (step 2) between the two extraction steps or not and the following influence on the purity of the pectin fraction with regard to CSP after the second extraction. All of the steps were performed at 70°C.

From the results obtained in table 4 it is seen that the washing between the two steps is important for obtaining a very high amount of CSP in the pectin fraction obtained from the second extraction i.e. CSPR is higher in Exp. I than II in the third step.

## Table 4

| Exp. | Step | Time hrs | pH | Ex. | Yield | DE | Intrinsic viscosity L/g | CSPR | US SAG° |
|------|------|----------|-----|------|-------|------|-------------------------|------|---------|
| I | 1 | 3 | 2.0 | H⁺ | 13.5% | 70.7% | 0.44 | 0.33 | 197 |
|  | 2 | 1 | 2.3 |  | 3.4% | 70.1% | 0.41 | 0.65 |  |
|  | 3 | 2 | 4.0 | NaPP | 8.7% | 57.5% | 0.37 | 0.96 | 220 |
| II | 1 | 3 | 2.0 | H⁺ | 13.1% | 70.2% | 0.39 | 0.53 | 200 |
|  | 3 | 2 | 4.0 | NaPP | 7.2% | 65.0% | 0.37 | 0.79 | 183 |

I: Washing step; II: No washing step; Ex.: Extractant; DE: degree of esterification; Yield: yield generated pr. step; CSPR: calcium sensitive pectin ratio; H⁺: 32% nitric acid added to achieve pH

NaPP: Sodium polyphosphate

**Experiment 2d** - **Different temperature, time, pH and extractants**

Comparative experiments were performed, where the temperature as well as the time and the pH of the extractions and the washing steps where changed.

The experiments were performed on orange peel from 2013.

In a first extraction (step 1) a strong acid was used for the extraction of pectin from the orange peel. This was followed by a wash with hot demineralised water (step 2) before a second extraction with a weak acid (step 3). In some of the experiments, a final washing procedure was performed (step 4).

Different second extractants were used in step 3, all of them having a pH from 3.6-4.5.

## Table 5

| Exp. | Step | Temp. °C | Time hrs | pH | Ex. | Yield | DE | Intrinsic viscosity L/g | CSPR | US SAG° |
|---|---|---|---|---|---|---|---|---|---|---|
| I | 1 | 70 | 3 | 2.0 | H$^+$ | 13.5% | 70.7% | 0.44 | 0.33 | 197 |
|  | 2 | 70 | 1 | 2.3 |  | 3.4% | 70.1% | 0.41 | 0.65 |  |
|  | 3 | 70 | 2 | 4.0 | NaPP | 8.7% | 57.5% | 0.37 | 0.96 | 220 |
|  | 4 | 70 | 1 | 4.4 |  | 5.8% | 58.2% | 0.34 | 0.96 |  |
| IV | 1 | 70 | 4 | 2.0 | H$^+$ | 13.1% | 69.1% | 0.50 | 0.48 | 197 |
|  | 2 | 70 | ½ | 2.3 |  | 3.1% | 70.8% | 0.43 | 0.61 |  |
|  | 3 | 75 | 1 | 3.8 | NaPP | 6.7% | 58.2% | 0.38 | 0.94 | 217 |
| VI | 1 | 65 | 2 | 1.5 | H$^+$ | 11.7% | 71.7% | 0.53 | 0.58 | 214 |
|  | 2 | 65 | 1 | 1.8 |  | 3.2% | 68.2% | 0.48 | 0.69 |  |
|  | 3 | 65 | 2 | 4.5 | NaPP | 12.9% | 56.1% | 0.51 | 0.96 | 233 |
| VII | 1 | 75 | 3 | 2.5 | H$^+$ | 11.6% | 72.5% | 0.49 | 0.47 | 195 |

|       |   |    |     |     |       |       |       |      |      |     |
|-------|---|----|-----|-----|-------|-------|-------|------|------|-----|
|       | 2 | 75 | 1   | 2.9 |       | 2.9%  | 71.1% | 0.41 | 0.60 |     |
|       | 3 | 75 | 2   | 3.6 | NaPP  | 8.2%  | 57.5% | 0.35 | 0.95 | 192 |
| VIII  | 1 | 68 | 4   | 2.2 | H⁺    | 10.5% | 71.6% | 0.53 | 0.65 | 205 |
|       | 2 | 68 | ½   | 2.5 |       | 2.3%  | 71.7% | 0.49 | 0.62 |     |
|       | 3 | 70 | 2   | 3.6 | NaPP  | 7.2%  | 61.4% | 0.47 | 0.91 | 205 |
| IX    | 1 | 70 | 1   | 1.8 | H⁺    | 9.3%  | 73.2% | 0.55 | 0.64 | 210 |
|       | 2 | 70 | 1   | 2.1 |       | 6.1%  | 70.8% | 0.52 | 0.71 |     |
|       | 3 | 60 | 4   | 3.8 | NaPP  | 9.5%  | 61.9% | 0.47 | 1.01 | 224 |
| X     | 1 | 72 | 1   | 1.8 | H⁺    | 11.0% | 71.8% | 0.53 | 0.60 | 213 |
|       | 2 | 72 | ½   | 2.1 |       | 3.7%  | 71.4% | 0.48 | 0.69 |     |
|       | 3 | 72 | 2   | 3.4 | NaPP  | 8.6%  | 58.0% | 0.42 | 0.91 | 223 |
| XI    | 1 | 72 | 3   | 1.8 | H⁺    | 14.9% | 72.6% | 0.51 | 0.66 | 194 |
|       | 2 | 72 | ½   | 2.1 |       | 3.1%  | 67.4% | 0.41 | 0.62 |     |
|       | 3 | 72 | 1   | 3.8 | NaPP  | 8.1%  | 56.2% | 0.35 | 1.02 | 207 |
| XIV   | 1 | 80 | 1   | 2.2 | H⁺    | 12.2% | 73.2% | 0.47 | 0.20 |     |
|       | 2 | 70 | 1   | 2.5 |       | 3.4%  | 70.8% | 0.43 | 0.70 |     |
|       | 3 | 60 | 4   | 3.8 | NaPP  | 8.6%  | 61.0% | 0.39 | 0.98 |     |
| XII   | 1 | 68 | 3   | 1.8 | H⁺    | 13.7% | 69.3% | 0.45 | 0.65 | 202 |
|       | 2 | 70 | 1   | 2.1 |       | 3.9%  | 68.9% | 0.39 | 0.55 |     |
|       | 3 | 70 | 2   | 3.6 | Ox.   | 6.5%  | 60.6% | 0.41 | 1.02 | 225 |
| XIII  | 1 | 68 | 3   | 1.8 | H⁺    | 13.3% | 69.3% | 0.49 | 0.60 | 204 |
|       | 2 | 68 | 1   | 2.1 |       | 3.7%  | 68.9% | 0.43 | 0.32 |     |
|       | 3 | 70 | 2   | 3.6 | Ox.   | 5.6%  | 60.6% | 0.44 | 0.97 | 218 |
| III   | 1 | 70 | 3   | 2.0 | H⁺    | 13.7% | 73.2% | 0.45 | 0.58 | 202 |
|       | 2 | 70 | 1   | 2.3 |       | 3.8%  | 67.6% | 0.42 | 0.69 |     |
|       | 3 | 70 | 2   | 3.6 | Ox.   | 5.3%  | 66.1% | 0.46 | 0.88 | 218 |
| XVI   | 1 | 68 | 3   | 1.8 | H⁺    | 13.6% | 70.0% | 0.49 | 0.61 |     |
|       | 2 | 70 | 1   | 2.1 |       | 3.2%  | 68.6% | 0.46 | 0.77 |     |
|       | 3 | 70 | 2   | 3.6 | Resin | 4.4%  | 63.8% | 0.42 | 0.94 |     |

| XVII | 1 | 68 | 3 | 1.8 | H+ | 14.4% | 69.3% | 0.46 | 0.63 | |
| | 2 | 70 | 1 | 2.1 | | 3.1% | 68.9% | 0.42 | 0.65 | |
| | 3 | 70 | 2 | 3.6 | Na2CO3 | 3.7% | 66.7% | 0.37 | 0.80 | |
| XXIV | 1 | 70 | 3 | 2.0 | H+ | 13.8% | 70.4% | 0.50 | 0.56 | |
| | 2 | 70 | 1 | 2.3 | | 3.3% | 69.5% | 0.44 | 0.71 | |
| | 3 | 42 | 2 | 5.5 | Na2CO3 | 3.4% | 66.8% | 0.47 | 0.92 | |

Ex.: Extractant; DE: degree of esterification; Yield: yield generated pr. step; CSPR: calcium sensitive pectin ratio; H+: 32% nitric acid added to achieve pH; NaPP: Sodium polyphosphate; Ox.: sodium oxalate; Resin: Amberlite 200C

The results in Table 5 shows that even though the time of extraction is changed, the pH differs as well as the temperature and the extractants used for the second extraction, the CSPR of the pectin fraction obtained in the third step is 0.8 or higher. Thus, as long as the pH of the second extraction is higher than the first extraction i.e. higher in step 3 than in step 1, the CSPR will remain high.

**Experiment 2e - Different pectin containing starting materials**

The procedure according to the invention can be used for multiple types of citrus peels. The experiments described in Table 6 show that a high cumulative yield and a high CSP ratio (CSPR) also can be obtained by the procedure according to the present invention using peel from lime, grapefruit and lemon.

## Table 6

| Type | Step No. | Temp. °C | Time hrs | pH | Ex. | DE | Yield | Intrinsic viscosity L/g | CSPR |
|------|----------|----------|----------|----|-----|----|-------|-------------------------|------|
| Orange | 1 | 70 | 3 | 2.0 | H+ | 70.7% | 13.5% | 0.44 | 0.33 |
| | 2 | 70 | 1 | 2.3 | | 70.1% | 3.4% | 0.41 | 0.65 |
| | 3 | 70 | 2 | 4.0 | NaPP | 57.5% | 8.7% | 0.37 | 0.96 |
| Lime | 1 | 70 | 3 | 2.0 | H+ | 69.7% | 16.0% | 0.44 | 0.49 |
| | 2 | 70 | 1 | 2.3 | | 69.1% | 3.4% | 0.40 | 0.56 |

| | 3 | 70 | 2 | 3.6 | NaPP | 58.2% | 8.3% | 0.39 | 0.86 |
| Grapefruit | 1 | 70 | 3 | 2.0 | H+ | 70.3% | 13.8% | 0.46 | 0.65 |
| | 2 | 70 | 1 | 2.3 | | 70.1% | 3.9% | 0.42 | 0.45 |
| | 3 | 70 | 2 | 3.6 | NaPP | 60.5% | 7.1% | 0.37 | 0.94 |

Orange: Orange peel from 2013; Lime: Lime peel from 2013; Grapefruit: Grapefruit peel from 2011; Ex.: Extractant; DE: degree of esterification; Yield: yield generated pr. step; CSPR: calcium sensitive pectin ratio; H+: 32% nitric acid added to achieve pH; NaPP: Sodium polyphosphate

Thus, from Table 6 it can be seen that the CSPR of the pectin fraction obtained in step 3 is 0.86 or above even when using different types of pectin containing starting materials.

**Experiment 2f - washing two times**

The number of washings between the first and the second extraction is at least one. This experiment washed once (36) or twice (53) between the first extraction (step 1) and the second extraction (step 3).
As is shown in Table 7 it can be seen that the CSPR in the pectin fraction achieved when washing just once is 0.88, while a higher CSPR of 0.96 - and a more pure CSP fraction - is achieved when washing the first residuum twice before carrying out the second extraction.
The experiments were performed on orange peel from 2013.

## Table 7

| Exp. No | Step No. | Temp. °C | Time hrs | pH | Ex. | Yield | DE | Intrinsic viscosity L/g | CSPR |
|---|---|---|---|---|---|---|---|---|---|
| III | 1 | 70 | 3 | 2.0 | H+ | 13.7% | 73.2% | 0.45 | 0.58 |
| | 2 | 70 | 1 | 2.3 | | 3.8% | 67.6% | 0.42 | 0.69 |
| | 3 | 70 | 2 | 3.6 | Ox. | 5.3% | 66.1% | 0.46 | 0.88 |
| XX | 1 | 70 | 3 | 2.0 | H+ | 14.4% | 70.6% | 0.50 | 0.55 |
| | 2a | 70 | 1 | 2.3 | | 3.4% | 70.2% | 0.45 | 0.69 |
| | 2b | 70 | 1 | 2.5 | | 4.4% | 71.1% | 0.43 | 0.77 |
| | 3 | 70 | 2 | 3.6 | Ox. | 2.4% | 61.8% | 0.44 | 0.96 |

Ex.: Extractant; Yield: yield generated pr. step; CSPR: calcium sensitive pectin ratio; H+: 32% nitric acid added to achieve pH; Ox.: sodium oxalate; DE: degree of esterification

**Experiment 3 - where the second extraction is performed on different pectin containing materials.**

**Materials**

1st fraction (combined step 1 and 2):

1 kg dry citrus peel was extracted at 70-73 °C in a thermostatic stirred reactor at pH 2.0 -2.2 in 30 kg of demineralised water. After 3 hours the peel residue was separated from the extraction liquid on a sieve (0.8 mm aperture) and transferred to the reactor and washed for 1 hour with 15 kg demineralised water at 70 °C. The peel residue was again separated and submitted to another wash at same conditions.

The first extract and the liquids from the washings were mixed, clarified by passing a vacuum filter with filter aid and further purified by passing a resin with Amberlite 200C in sodium form. The purified pectin juice was concentrated to approx. 1.8% pectin by ultrafiltration and the concentrate was precipitated in two volumes of 80% by weight 2-propanol. The precipitated pectin was further washed with 60% by weight 2-propanol and dried at 45 °C over night. The dried pectin was weighed and milled to pass a 0.5 mm sieve.

3rd fraction (step 3):

Weighed parts of the peel residue were submitted to different pectin extractions to isolate additional pectin yield at different extraction conditions. The extractions were performed with 1N NaOH. Temperatures were from 0 to 30 °C, pH varied from 4.5 to 12, extraction time from less than one hour to above 2 hours. After extraction the mixture was weighed and the peel residue was separated from the extraction liquid on a sieve (0.8 mm aperture). The first extract was centrifuged and a weighed part of the clear centrifugate was precipitated in two volumes of 80% by weight 2-propanol. The precipitated pectin was further washed with 60% by weight 2-propanol and dried at 45 °C over night. The dried pectin was weighed and milled to pass a 0.5 mm sieve. Pectin yield from the third fraction was calculated by determining the pectin concentration in the centrifugate, which is equal to the pectin concentration in the liquid in the extraction mixture.

The pectin yield (Yield), the degree of esterification (DE), the intrinsic viscosity and the calcium sensitive pectin ratio (CSPR) in the pectin fraction were calculated as described above under "method".

**Results**

Experiments were performed on different pectin containing starting materials being orange peel (Table 8), lime peel (Table 9) and lemon peel (Table 10). The starting material was extracted using an acidic solution and following washed (step 1+2). The obtained residuum was separated into multiple sub-residues, which were subjected to a second extraction using NaOH (step 3) using different extraction settings such as pH, temperature and time.

As can be seen in table 8, the results show that using orange peel as a starting material a high CSPR can be achieved in the extracted pectin fraction from 0.84-1.07 when using a base extraction. In addition, a high cumulative pectin yield is obtained from 28.5%-32.6%.

**Table 8: Orange peel**

| Step no. | Temperature | pH | Time hrs | Yield | DE | Intrinsic viscosity | CSPR |
|---|---|---|---|---|---|---|---|
| 1+2 *) | 73 °C | 2.0 | 2 | 22.0% | 73.0% | 0.45 | 0.62 |
| 3 | 0.5 °C | 10 | 2.03 | 8.6% | 55.0% | 0.38 | 0.97 |
| 3 | 0.5 °C | 9.5 | 2.11 | 8.5% | 54.6% | 0.38 | 0.84 |
| 3 | 2°C | 9.0 | 2 | 7.6% | 54.2% | 0.40 | 1.02 |
| 3 | 0.5 °C | 8.5 | 2 | 6.5% | 55.9% | 0.40 | 1.02 |
| 3 | 0.8 °C | 8.0 | 2 | 6.5% | 55.7% | 0.41 | 1.02 |
| 3 | 20°C | 10 | 2 | 8.8% | 46.3% | 0.31 | 1.07 |
| 3 | 22 °C | 7.5 | 2 | 10.6% | 55.8% | 0.39 | 1.00 |
| *including 1st wash<br>Yield: yield generated pr. step; CSPR: calcium sensitive pectin ratio; DE: degree of esterification | | | | | | | |

**Table 9: Lime peel**

| Step no. | Temperature | pH | Time hrs | Yield | DE | Intrinsic viscosity | CSPR |
|---|---|---|---|---|---|---|---|
| 1+2 | 74 °C | 2.2 | 2 | 19.5% | 73.1% | 0.48 | 0.57 |
| 3 | 2 °C | 10 | 2.08 | 13.2% | 61.7% | 0.50 | 0.85 |
| 3 | 2 °C | 7.5 | 2 | 12.3% | 64.3% | 0.52 | 0.99 |

(continued)

| Step no. | Temperature | pH | Time hrs | Yield | DE | Intrinsic viscosity | CSPR |
|---|---|---|---|---|---|---|---|
| 3 | 16-18 °C | 7.5 | 2 | 12.6% | 60.9% | 0.48 | 0.84 |
| 3 | 2 °C | 8.5 | 2 | 11.8% | 64.3% | 0.51 | 0.89 |
| 3 | 20 °C | 6.0 | 2 | 11.9% | 61.3% | 0.49 | 0.88 |
| 3 | 20 °C | 4.5 | 2 | 11.8% | 61.5% | 0.47 | 0.79 |
| Yield: yield generated pr. step; CSPR: calcium sensitive pectin ratio; DE: degree of esterification | | | | | | | |

As can be seen in table 9, the results show that using lime peel as a starting material a high CSPR can be achieved in the extracted pectin fraction from 0.79-0.99 when using a base extraction. In addition, a high cumulative pectin yield is obtained from 31.3%-32.7%.

As can be seen in table 10, the results show that using lemon peel as a starting material a high CSPR can be achieved in the extracted pectin fraction when using a base extraction from 0.88-1.17. In addition, a high cumulative pectin yield is obtained from 32.9%-39.9%.

**Table 10: Lemon peel**

| Step no. | Temperature | pH | Time hrs | Yield | DE | Intrinsic viscosity | CSPR |
|---|---|---|---|---|---|---|---|
| 1+2 | 71 °C | 2.0 | 3 | 26.4% | 74.0% | 0.54 | 0.47 |
| 3 | 5 °C | 11.5 | 2 | 8.9% | 47.6% | 0.33 | 1.05 |
| 3 | 5°C | 10.5 | 2 | 8.6% | 58.8% | 0.39 | 0.88 |
| 3 | 30°C | 12.0 | 0.8 | 14.8% | 5.9% | 0.10 | 1.17 |
| 3 | 13 °C | 11.5 | 2 | 7.1% | 19.0% | 0.22 | 1.16 |
| 3 | 30 °C | 11.0 | 2.7 | 6.5% | 4.7% | 0.13 | 1.04 |
| 3 | 50 °C | 10.5 | 0.93 | 7.7% | 6.3% | 0.06 | 1.04 |
| Yield: yield generated pr. step; CSPR: calcium sensitive pectin ratio; DE: degree of esterification | | | | | | | |

## Claims

1.  A process for extraction of calcium sensitive pectin from a pectin containing starting material comprising:

    a. a first step being an acid extraction, where said starting material is subjected to extraction using an acidic solution having a pH between 1.5 - 2.5, extracting a first extract leaving a first residuum, where said first extract comprises calcium tolerant pectin;
    b. optionally, a second step, where the first residuum is subjected to at least one washing resulting in a second residuum and a second extract;
    c. a third step being a second extraction, where said first or second residuum is subjected to said second extraction using a third solution extracting a third extract leaving a third residuum where said third extract comprises calcium sensitive pectin; and where the pH of said third solution is higher than the pH of said acidic solution and said third solution is a chelate forming solution.

2.  The process according to claim 1, **characterized in that** the pH of said acidic solution is 2-2.5.

3.  The process according to any of the preceding claims, **characterized in that** the pH of said third solution is from 2.5 to 7, such as from 2.5 to 4, such as from 4 to 6.

4.  The process according to any of the claims 1-3, **characterized in that** the pH of the third solution is from 7 to 14, such as from 8 to 12, such as from 8 to 10, such as from 10 to 12.

5.  The process according to any of the preceding claims, **characterized in that** said process comprises a fourth step, where said third residuum is subjected to at least one washing resulting in a fourth extract and a fourth residuum.

6. The process according to any of the preceding claims, **characterized in that** said third solution comprises one or more of salts of partially neutralized inorganic acids like polyphosphate, borate, phosphate, pyrophosphate, phosphonates, hydrogen carbonate, hydrogen sulphate, zeolites, cationic organic resins, salts of partially neutralized organic acids or polycarboxylates such as tartrate, citrate, oxalate, gluconate, EDTA (ethylenediamine tetra acetic acid), DTPA (diethylenetriamine penta acetic acid), NTA (nitrilo triacetate), imidazole and derivates.

7. The process according to any of the preceding claims, **characterized in that** said chelate forming solution comprises one or more of the following polyphosphates, citric acid or its salts, oxalic acid or its salts, phosphoric acid or its salts, salts of partly neutralized di- or multivalent organic acids like EDTA, CDTA, DTPA, NTA, imidazole, oxalic acid, carbonic acid or cationic ion exchange resins.

8. The process according to any of the claims 1-5, **characterized in that** said third solution comprises one or more bases or base salts with monovalent cations.

9. The process according to any of the preceding claims, **characterized in that** the temperature of said acid extraction and/or said second extraction is between 15-100°C, such as between 65-75°C.

10. The process according to any of the preceding claims, **characterized in that** said washing is performed in a ratio of washing solution:dry plant material from 5:1 to 50:1.

11. Pectin fraction obtainable by the process as described in any of the claims 1-10, **characterized in that** the calcium sensitive pectin ratio (CSPR) is above 0.75, such as above 0.80, like above 0.85, such as above 0.90.

12. Pectin fraction according to claim 11, **characterized in that** the degree of esterification (DE) is above 50%, such as above 55%, like above 60%, such as above 65%.

13. A use of pectin according to any of the claims 11-12 for stabilizing beverages, structuring of acidified dairy products, as a dietary fiber, a gelling agent, a stabilizer in dairy desserts and/or a protein complexing agent.

14. The use according to claim 13, **characterized in that** the beverage is acidified milk or diluted fruit juices.


**Patentansprüche**

1. Verfahren zur Extraktion von calciumempfindlichem Pektin aus einem pektinhaltigen Ausgangsmaterial, umfassend:

   a. einen ersten Schritt, der eine Säureextraktion ist, wobei das Ausgangsmaterial Extraktion unter Verwendung einer sauren Lösung mit einem pH-Wert zwischen 1,5 und 2,5 unterzogen wird, um einen ersten Extrakt zu extrahieren und ein erstes Residuum zurückzulassen, wobei der erste Extrakt calciumtolerantes Pektin umfasst;
   b. gegebenenfalls einen zweiten Schritt, bei dem das erste Residuum wenigstens einmaligem Waschen unterzogen wird, um ein zweites Residuum und einen zweiten Extrakt zu ergeben;
   c. einen dritten Schritt, der eine zweite Extraktion ist, bei dem das erste oder zweite Residuum der zweiten Extraktion unter Verwendung einer dritten Lösung unterzogen wird, um einen dritten Extrakt zu extrahieren und ein drittes Residuum zurückzulassen, wobei der dritte Extrakt calciumempfindliches Pektin umfasst; und wobei der pH-Wert der dritten Lösung höher als der pH-Wert der sauren Lösung ist und die dritte Lösung eine chelatbildende Lösung ist.

2. Verfahren gemäß Anspruch 1, **dadurch gekennzeichnet, dass** der pH-Wert der sauren Lösung 2 bis 2,5 beträgt.

3. Verfahren gemäß einem der vorstehenden Ansprüche, **dadurch gekennzeichnet, dass** der pH-Wert der dritten Lösung von 2,5 bis 7, wie z.B. von 2,5 bis 4, wie z.B. von 4 bis 6, beträgt.

4. Verfahren gemäß einem der Ansprüche 1-3, **dadurch gekennzeichnet, dass** der pH-Wert der dritten Lösung von 7 bis 14, wie z.B. von 8 bis 12, wie z.B. von 8 bis 10, wie z.B. von 10 bis 12, beträgt.

5. Verfahren gemäß einem der vorstehenden Ansprüche, **dadurch gekennzeichnet, dass** das Verfahren einen vierten Schritt umfasst, bei dem das dritte Residuum wenigstens einmaligem Waschen unterzogen wird, um einen vierten Extrakt und ein viertes Residuum zu ergeben.

6. Verfahren gemäß einem der vorstehenden Ansprüche, **dadurch gekennzeichnet, dass** die dritte Lösung ein oder mehrere Salze von teilweise neutralisierten anorganischen Säuren wie Polyphosphat, Borat, Phosphat, Pyrophosphat, Phosphonate, Hydrogencarbonat, Hydrogensulfat, Zeolithe, kationische organische Harze, Salze von teilweise neutralisierten organischen Säuren, oder Polycarboxylate, wie z.B. Tartrat, Citrat, Oxalat, Gluconat, EDTA (Ethylendiamintetraessigsäure), DTPA (Diethylentriaminpentaessigsäure), NTA (Nitrilotriacetat), Imidazol und Derivate umfasst.

7. Verfahren gemäß einem der vorstehenden Ansprüche, **dadurch gekennzeichnet, dass** die chelatbildende Lösung eines oder mehrere der Folgenden Polyphosphate, Citronensäure oder ihre Salze, Oxalsäure oder ihre Salze, Phosphorsäure oder ihre Salze, Salze von teilweise neutralisierten zwei- oder mehrwertigen organischen Säuren wie EDTA, CDTA, DTPA, NTA, Imidazol, Oxalsäure, Kohlensäure oder kationische Ionenaustauschharze umfasst.

8. Verfahren gemäß einem der Ansprüche 1-5, **dadurch gekennzeichnet, dass** die dritte Lösung eine oder mehrere Basen oder Basesalze mit einwertigen Kationen umfasst.

9. Verfahren gemäß einem der vorstehenden Ansprüche, **dadurch gekennzeichnet, dass** die Temperatur der Säureextraktion und/oder der zweiten Extraktion zwischen 15 und 100 °C, wie z.B. zwischen 65 und 75 °C, beträgt.

10. Verfahren gemäß einem der vorstehenden Ansprüche, **dadurch gekennzeichnet, dass** das Waschen in einem Verhältnis von Waschlösung:trockenem Pflanzenmaterial von 5:1 bis 50:1 durchgeführt wird.

11. Pektinfraktion, erhältlich durch das Verfahren gemäß einem der Ansprüche 1-10, **dadurch gekennzeichnet, dass** der Anteil von calciumempfindlichem Pektin (CSPR) größer als 0,75, wie z.B. größer als 0,80, wie größer als 0,85, wie z.B. größer als 0,90, ist.

12. Pektinfraktion gemäß Anspruch 11, **dadurch gekennzeichnet, dass** der Veresterungsgrad (DE) größer als 50 %, wie z.B. größer als 55 %, wie größer als 60 %, wie z.B. größer als 65 %, ist.

13. Verwendung von Pektin gemäß einem der Ansprüche 11-12 zum Stabilisieren von Getränken, Strukturieren von angesäuerten Milchprodukten, als Ballaststoff, als Geliermittel, als Stabilisator in Milchdesserts und/oder als Protein-Komplexbildner.

14. Verwendung gemäß Anspruch 13, **dadurch gekennzeichnet, dass** das Getränk angesäuerte Milch oder verdünnte Fruchtsäfte ist.

**Revendications**

1. Procédé pour l'extraction d'une pectine sensible au calcium à partir d'une matière de départ contenant une pectine comprenant :

   a. une première étape qui est une extraction à l'acide, où ladite matière de départ est soumise à une extraction en utilisant une solution acide possédant un pH compris entre 1,5 et 2,5, extrayant un premier extrait laissant un premier résidu, où ledit premier extrait comprend une pectine tolérante au calcium ;
   b. éventuellement, une deuxième étape, où le premier résidu est soumis à au moins un lavage résultant en un deuxième résidu et un deuxième extrait ;
   c. une troisième étape qui est une deuxième extraction, où ledit premier ou deuxième résidu est soumis à ladite deuxième extraction en utilisant une troisième solution extrayant un troisième extrait laissant un troisième résidu où ledit troisième extrait comprend une pectine sensible au calcium ; et où le pH de ladite troisième solution est supérieur au pH de ladite solution acide et ladite troisième solution est une solution de formation de chélate.

2. Procédé selon la revendication 1, **caractérisé en ce que** le pH de ladite solution acide est de 2 à 2,5.

3. Procédé selon l'une quelconque des revendications précédentes, **caractérisé en ce que** le pH de ladite troisième solution est de 2,5 à 7, tel que de 2,5 à 4, tel que de 4 à 6.

**4.** Procédé selon l'une quelconque des revendications 1 à 3, **caractérisé en ce que** le pH de la troisième solution est de 7 à 14, tel que de 8 à 12, tel que de 8 à 10, tel que de 10 à 12.

**5.** Procédé selon l'une quelconque des revendications précédentes, **caractérisé en ce que** ledit procédé comprend une quatrième étape, où ledit troisième résidu est soumis à au moins un lavage résultant en un quatrième extrait et un quatrième résidu.

**6.** Procédé selon l'une quelconque des revendications précédentes, **caractérisé en ce que** ladite troisième solution comprend l'un ou plusieurs parmi des sels d'acides inorganiques partiellement neutralisés comme un polyphosphate, un borate, un phosphate, un pyrophosphate, des phosphonates, un hydrogénocarbonate, un hydrogénosulfate, des zéolithes, des résines organiques cationiques, des sels d'acides organiques ou de polycarboxylates partiellement neutralisés tels qu'un tartrate, un citrate, un oxalate, un gluconate, l'EDTA (acide éthylènediaminetétraacétique), le DTPA (acide diéthylènetriaminepentaacétique), le NTA (nitrilotriacétate), l'imidazole et des dérivés.

**7.** Procédé selon l'une quelconque des revendications précédentes, **caractérisé en ce que** ladite solution de formation de chélate comprend l'un ou plusieurs parmi les suivants : polyphosphates, acide citrique ou ses sels, acide oxalique ou ses sels, acide phosphorique ou ses sels, sels d'acides organiques divalents ou polyvalents partiellement neutralisés comme l'EDTA, le CDTA, le DTPA, le NTA, l'imidazole, l'acide oxalique, l'acide carbonique ou des résines d'échange d'ions cationiques.

**8.** Procédé selon l'une quelconque des revendications 1 à 5, **caractérisé en ce que** ladite troisième solution comprend un(e) ou plusieurs bases ou sels de base avec des cations monovalents.

**9.** Procédé selon l'une quelconque des revendications précédentes, **caractérisé en ce que** la température de ladite extraction à l'acide et/ou de ladite deuxième extraction est comprise entre 15 et 100 °C, telle qu'entre 65 et 75 °C.

**10.** Procédé selon l'une quelconque des revendications précédentes, **caractérisé en ce que** ledit lavage est réalisé en un rapport de solution de lavage : matière végétale sèche de 5 : 1 à 50 : 1.

**11.** Fraction de pectine pouvant être obtenue par le procédé tel que décrit dans l'une quelconque des revendications 1 à 10, **caractérisée en ce que** le rapport de pectine sensible au calcium (CSPR) est supérieur à 0,75, tel que supérieur à 0,80, comme supérieur à 0,85, tel que supérieur à 0,90.

**12.** Fraction de pectine selon la revendication 11, **caractérisée en ce que** le degré d'estérification (DE) est supérieur à 50 %, tel que supérieur à 55 %, tel que supérieur à 60 %, tel que supérieur à 65 %.

**13.** Utilisation de pectine selon l'une quelconque des revendications 11 et 12 pour la stabilisation de boissons, la structuration de produits laitiers acidifiés, comme une fibre diététique, un agent gélifiant, un stabilisant dans des desserts lactés et/ou un agent de complexation de protéines.

**14.** Utilisation selon la revendication 13, **caractérisée en ce que** la boisson est un lait acidifié ou des jus de fruits dilués.

**REFERENCES CITED IN THE DESCRIPTION**

**Patent documents cited in the description**

- WO 9858968 A
- US 4016351 A

- WO 0039168 A

**Non-patent literature cited in the description**

- Food Chemical Codex. National Academic Press, 1981, 216

- *Food Tech,* 1959, vol. 13 (9), 496-500